# EUROPÄISCHE PATENTANMELDUNG

(11) **EP 1 688 276 A2**
(43) Veröffentlichungstag der Anmeldung: **09.08.2006**
(21) Anmeldenummer: 05112734.8
(22) Anmeldetag: 22.12.2005
(51) Int. Cl.: B60C 19/00

(54) **Fahrzeugreifen**

(30) Priorität: 03.02.2005 DE 102005005221
(71) Anmelder: Continental Aktiengesellschaft, 30165 Hannover (DE)
(72) Erfinder: Schneider, Oliver, 30519, Hannover (DE); Fischer, Stefan, 30974, Wennigsen (DE)

(57) **Zusammenfassung**

Die Erfindung betrifft einen Fahrzeugreifen mit einem Laufstreifen, Seitenwänden und einem auf der Reifeninnenseite angeordneten Reifenmodul.

Um einen Fahrzeugreifen mit einem Reifenmodul bereitzustellen, bei dem die Ungleichförmigkeit in der Abrollbewegung reduziert ist, wird vorgeschlagen, dass ein Ausgleichsmittel (4) zur Kompensation von Ungleichförmigkeiten des Reifens infolge der Reifenmodulanordnung auf der Reifeninnenseite (2) angeordnet ist.

## Beschreibung

Die Erfindung betrifft einen Fahrzeugreifen mit einem Laufstreifen, Seitenwänden und einem auf der Reifeninnenseite angeordneten Reifenmodul.

Mit Transpondern versehene Reifenmodule werden im Reifen für verschiedene Aufgaben eingesetzt. Hierzu zählt insbesondere eine Reifenidentifikation, mit der ein Automobilhersteller u. a. schnell sowie automatisiert feststellen kann, aus welchem Reifenwerk ein bestimmter Reifen geliefert wurde. Andere Aufgaben können eine Luftdrucküberwachung, eine Temperaturmessung, die Messung von mechanischen Spannungszuständen im Reifen oder eine Messung der zurückgelegten Laufleistung des Reifens umfassen. Moderne Transponder bestehen aus einem Elektronikbauteil bzw. - Chip, in dem Sensorelemente angeordnet sein können sowie aus einer an dieses Elektronikbauteil angeschlossenen Antenne.

Ein Problem bei Reifenmodulen ist mit der Anordnung des Reifenmodules im Reifen verbunden. Das Reifenmodul bewirkt aufgrund seiner Eigenmasse eine Ungleichförmigkeit in der Abrollbewegung des Reifens, die wiederum negative Reifenschwingungen zur Folge haben.

Der Erfindung liegt die Aufgabe zugrunde, einen Fahrzeugreifen mit einem Reifenmodul bereitzustellen, bei dem die Ungleichförmigkeit in der Abrollbewegung reduziert ist.

Gelöst wird die Aufgabe gemäß den kennzeichnenden Merkmalen von Anspruch 1 dadurch, dass ein Ausgleichsmittel zur Kompensation von Ungleichförmigkeiten des Reifens infolge der Reifenmodulanordnung auf der Reifeninnenseite angeordnet ist.

Ein Vorteil der Erfindung ist insbesondere darin zu sehen, dass das Ausgleichsmittel sich auf einfache Art und Weise auf der Reifeninnenseite anordnen lässt und durch diesen Ausgleich Ungleichförmigkeiten in der Abrollbewegung des Fahrzeugreifens auf ein Minimum reduziert werden.

In einer vorteilhaften Weiterbildung der Erfindung ist vorgesehen, dass das Ausgleichsmittel ein auf der Reifeninnenseite angeordneter Gummistreifen ist.
Ein solcher Gummistreifen lässt sich auf einfache Weise in einem Fahrzeugreifen anordnen.

In einer weiteren vorteilhaften Weiterbildung der Erfindung ist vorgesehen, dass der Gummistreifen ringförmig über den Reifenumfang verteilt angeordnet ist.
Auf diese Weise ist das Ausgleichsmittel optimal über den Reifenumfang verteilt.

In einer weiteren vorteilhaften Weiterbildung der Erfindung ist vorgesehen, dass der Gummistreifen im Bereich der Reifenmodulanordnung eine Aussparung aufweist.
Eine solche Aussparung lässt sich auf einfache Weise realisieren.

In einer weiteren vorteilhaften Weiterbildung der Erfindung ist vorgesehen, dass die Aussparung eine Breite zwischen 10 und 200 mm, vorzugsweise etwa 80 mm, besitzt. Untersuchungen zeigen, dass in diesem Breitenbereich die Ungleichförmigkeiten in der Abrollbewegung des Fahrzeugreifens auf ein Minimum reduziert werden.

In einer weiteren vorteilhaften Weiterbildung der Erfindung ist vorgesehen, dass der Gummistreifen bei der Reifenvulkanisation mit der Reifeninnenseite verbunden wird.
Das Einvulkanisieren des Gummistreifens während der Reifenvulkanisation lässt sich einfach umsetzen.

In einer weiteren vorteilhaften Weiterbildung der Erfindung ist vorgesehen, dass ein Trennmittel zwischen Gummistreifen und Reifeninnenseite vorgesehen ist. Das Trennmittel bietet den Vorteil, dass der Gummistreifen einfach und schnell wieder von der Reifeninnenseite gelöst werden kann. Dies kann insbesondere für den Fall erforderlich sein, wenn der Fahrzeugreifen ohne ein Reifenmodul ausgeliefert werden soll.

In einer weiteren vorteilhaften Weiterbildung der Erfindung ist vorgesehen, dass das Trennmittel eine Folie ist. Eine solche Folie lässt sich einfach zwischen Gummistreifen und Reifeninnenseite einbinden.

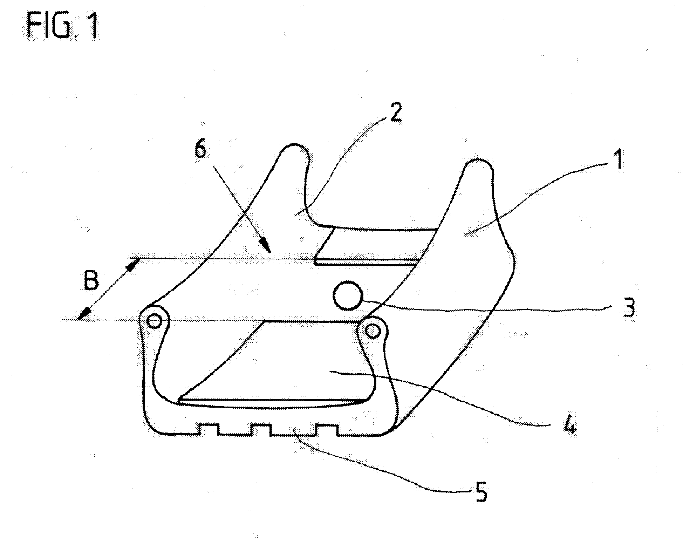

Anhand eines Ausführungsbeispieles soll die Erfindung näher erläutert werden. Die einzige Figur 1 zeigt eine perspektivische Darstellung des Reifenabschnittes 1. Auf der Reifeninnenseite 2 ist im Reifenzenit das Reifenmodul 3 angeordnet, in dem z. B. ein Transponder für eine Druckmessung angeordnet ist. Auf der Reifeninnenseite 2 ist umlaufend über den gesamten Reifenumfang ein Gummistreifen 4 als eine Form eines Auslgeichsmittels angeordnet, im Wesentlichen koaxial zum Laufstreifen 5. Der Gummistreifen 4 besitzt im Bereich der Reifenmodulanordnung auf der Reifeninnenseite 2 eine Aussparung 6, die eine Breite B von etwa 80 mm besitzt. Aufgrund des Einbringens der Zusatzmasse des Gummistreifens 4 wird ein Ausgleich für die Masse des Reifenmodules 3 bewirkt, der wiederum ein gleichmäßiges Abrollen des Fahrzeugreifens zur Folge hat und dadurch negative Reifenschwingungen verhindert. Insbesondere wird durch die Anordnung des Gummistreifens 4 der Tire-Uniformity-Wert des Fahrzeugreifens optimiert. Der Gummistreifen 4, der vorzugsweise aus Innenliner-Material besteht, könnte alternativ auch diskontinuierlich in mehreren Einzelteilen ausgeführt sein. Denkbar sind z.B. ein oder mehrere über den Reifenumfang verteile Punktmassen. Ferner lässt sich die Anordnung des Gummistreifens 4 einfach in einem Fahrzeugreifen mit einer verstärkten Seitenwand (SSR) integrieren. Der Gummistreifen 4 läßt sich bei der Reifenvulkanisation einfach mit der Reifeninnenseite verbinden. Eine Alternative wäre eine Fixation des Gummistreifens 4 mit einem Klebemittel nach der Vulkanisation.

### Bezugszeichenliste (ist Teil der Beschreibung)

- 1: Reifenabschnitt
- 2: Reifeninnenseite
- 3: Reifenmodul
- 4: Gummistreifen als Ausgleichsmittel
- 5: Laufstreifen
- 6: Aussparung

- B: Breite

## Patentansprüche

1. Fahrzeugreifen mit einem Laufstreifen (5), Seitenwänden und einem auf der Reifeninnenseite (2) angeordneten Reifenmodul (3),
**dadurch gekennzeichnet, dass**
ein Ausgleichsmittel (4) zur Kompensation von Ungleichförmigkeiten des Reifens infolge der Reifenmodulanordnung auf der Reifeninnenseite (2) angeordnet ist.

2. Fahrzeugreifen nach Anspruch 1,
**dadurch gekennzeichnet, dass**
das Ausgleichsmittel (4) ein auf der Reifeninnenseite angeordneter Gummistreifen (4) ist.

3. Fahrzeugreifen nach Anspruch 1 oder 2,
**dadurch gekennzeichnet, dass**
der Gummistreifen (4) ringförmig über den Reifenumfang verteilt angeordnet ist.

4. Fahrzeugreifen nach einem der Ansprüche 1 bis 3,
**dadurch gekennzeichnet, dass**
der Gummistreifen (4) im Bereich der Reifenmodulanordnung eine Aussparung (6) aufweist.

5. Fahrzeugreifen nach einem der Ansprüche 1 bis 4,
**dadurch gekennzeichnet, dass**
die Aussparung eine Breite (B) zwischen 10 und 200 mm, vorzugsweise etwa 80 mm, besitzt.

6. Fahrzeugreifen nach einem der Ansprüche 1 bis 5,
**dadurch gekennzeichnet, dass**
der Gummistreifen (4) bei der Reifenvulkanisation mit der Reifeninnenseite (2) verbunden wird.

7. Fahrzeugreifen nach einem der Ansprüche 1 bis 6,
**dadurch gekennzeichnet, dass**
ein Trennmittel zwischen Gummistreifen (4) und Reifeninnenseite (2) vorgesehen ist.

8. Fahrzeugreifen nach einem der Ansprüche 1 bis 7,
**dadurch gekennzeichnet, dass**
das Trennmittel eine Folie ist.
